# EUROPEAN PATENT APPLICATION

(11) **EP 4 517 632 A1**
(43) Date of publication of application: **05.03.2025**
(21) Application number: 23194696.3
(22) Date of filing: 31.08.2023
(51) Int. Cl.: G06Q 20/40, G06Q 20/22, G06F 21/62, H04L 9/00

(54) **SYSTEM AND COMPUTER-IMPLEMENTED METHOD FOR PROCESSING A REQUEST ASSOCIATED WITH SENSITIVE DATA**

(71) Applicant: Mastercard International Incorporated, Purchase NY 10577 (US)
(72) Inventor: KUMAR, Varun, Ickenham, Uxbridge, UB10 8HW (GB); SHARMA, Sahil, 560087 Bengaluru (IN); PALISETTI, Krishna Mohan, 560066 Bangalore (IN)
(74) Representative: Murgitroyd & Company

(57) **Abstract**

The present disclosure relates to a computer-implemented method (300) of processing a request associated with sensitive data, the method comprising: receiving (302), at a rule processor (200), intercepted data, wherein the intercepted data corresponds to the request associated with the sensitive data; retrieving (304), by the rule processor (200), a machine-readable rule (212) associated with the request, wherein the machine-readable rule (212) defines: one or more criteria associated with the machine-readable rule (212); and an action associated with the machine-readable rule (212); extracting (306), by the rule processor (200), one or more attributes from the intercepted data; evaluating (308), by the rule processor (200), the one or more criteria defined by the machine-readable rule (212) using the one or more attributes; and initiating (312), by the rule processor (200), the action defined by the machine-readable rule (212) in response to determining that one of the one or more criteria defined by the machine-readable rule (212) is satisfied.

## Description

### FIELD

The present disclosure relates to a system and a computer-implemented method for processing a request associated with sensitive data.

### BACKGROUND

In many countries, sensitive data is subject to regulations regarding access to the data and processing of the data. For example, certain countries (such as India, South Africa and China) have regulations concerning the sovereignty of payment transaction data. In particular, such regulations may specify that domestic payment transaction data is to be stored within the country, that any processing of the domestic transaction data is to be carried out at infrastructure located within the same country, and that download of the payment transaction data is prohibited.

The consequences of non-adherence to regulations relating to payment transaction data can be high. For example, a business may even be prohibited from operating in a particular country if it is found not to be adhering to that country's regulations. At the same time, the cost to businesses of ensuring compliance with these regulations is high. Any changes to business practices have to be documented and carefully audited in order to ensure compliance with the regulations. In view of the need for careful auditing of changes to business practices, businesses can be slow to implement new practices.

Current enforcement of such regulations is limited to a manual process of monitoring whether businesses that handle such payment transaction data (e.g. payment networks) comply with the regulations. This can be a long process involving auditing a business' documentation in order to determine compliance with the regulations. In addition, such monitoring may take place after the payment transaction data has been accessed and/or processed, and may therefore be capable of identifying that a violation of the regulations has occurred, but incapable of preventing the violation from occurring.

Monitoring compliance with the regulations is also challenging in view of the diverse landscape of systems and applications that interface with payment transaction data. For example, payment transaction data may be stored in a transaction database and periodically transferred to an analytics database. The analytics database may allow queries to be carried out on the payment transaction data stored in the analytics database. At the same time, service instances may process data and/or add to the payment transaction data stored in the transaction database, while end users may initiate requests associated with payment transaction data (e.g. a payment transaction request), which are then processed by the service instances. Challenges exist in ensuring compliance with payment transaction data regulations across this diverse landscape of systems and applications.

Moreover, in light of the manual process of monitoring compliance with payment transaction data regulations, no mechanism exists for tracking whether such regulations are being enforced, for reporting violations of such regulations, or for reporting enforcement of such regulations.

The payment transaction data can also include sensitive personal information such as personal identifying information (PII). Accordingly, the payment transaction data regulations can prevent misuse of customer's sensitive personal information. A further problem with current systems is therefore that there is no reliable mechanism for preventing violation of regulations that protect customers' sensitive personal information.

In addition to payment transaction data, other types of sensitive data may also be subject to regulations regarding access, storage and/or processing of the data. For example, certain regulations may regulate access, storage and/or processing of sensitive user data such as passport numbers, which a customer may provide to an airline's website. In another example, access, storage and/or processing of users' biometric data (such as fingerprint data, voice data, face images, etc.) may be regulated.

Accordingly, there exists a need for a mechanism to enforce regulations concerning access, storage and/or processing of sensitive data, and to prevent violation of regulations that protect customers' sensitive personal information. In addition, there exists a need for a mechanism to monitor violations of regulations relating to sensitive data and enforcement of such regulations.

### SUMMARY

This summary introduces concepts that are described in more detail in the detailed description. It should not be used to identify essential features of the claimed subject matter, nor to limit the scope of the claimed subject matter.

According to a first aspect of the present disclosure, there is provided a computer-implemented method of processing a request associated with sensitive data, the method comprising: receiving, at a rule processor, intercepted data, wherein the intercepted data corresponds to the request associated with the sensitive data; retrieving, by the rule processor, a machine-readable rule associated with the request, wherein the machine-readable rule defines: one or more criteria associated with the machine-readable rule; and an action associated with the machine-readable rule; extracting, by the rule processor, one or more attributes from the intercepted data; evaluating, by the rule processor, the one or more criteria defined by the machine-readable rule using the one or more attributes; and initiating, by the rule processor, the action defined by the machine-readable rule in response to determining that one of the one or more criteria defined by the machine-readable rule is satisfied.

The present disclosure provides a method in which rules relating to sensitive data are provided in a machine-readable format, thereby allowing such rules to be evaluated against attributes extracted from a request associated with the sensitive data. By providing the rules in a machine-readable format, the rules can be evaluated automatically, thereby removing the need for manual monitoring for compliance with the rules.

In addition, by initiating an action defined by a machine-readable rule, violation of a particular rule can either be prevented, or compensated for. Consequently, the present disclosure provides a mechanism for determining whether certain regulations relating to sensitive data are violated, and for preventing other regulations relating to sensitive data from being violated in the first place. This means that both violation of the regulations and enforcement of the regulations can be determined and monitored. The systems and methods described herein therefore allow an entity (such as a central bank) to identify a number of rule violations, along with actions (such as compensation events) associated with those violations. Accordingly, the systems and methods described herein provide increased visibility into compliance with rules associated with sensitive data.

Initiating the action defined by the machine-readable rule may comprise denying, by the rule processor, the request associated with the sensitive data.

Denying the request associated with the sensitive data may comprise denying access to the sensitive data. For example, the sensitive data may comprise payment transaction data that includes sensitive customer information such as PII. By denying access to the sensitive customer information, the sensitive customer information contained in the payment transaction data is protected. Accordingly, the systems and methods described herein also prevent misuse of sensitive customer information such as PII.

The machine-readable rule may be stored on a blockchain. Retrieving the machine-readable rule may comprise retrieving the machine-readable rule from the blockchain. Storage of the machine-readable rules on a blockchain (i.e. a tamper-proof mechanism) allows regulations relating to the sensitive data to be implemented in a tamper-proof manner. Consequently, the machine-readable rules cannot be changed without such changes being visible to other parties.

Evaluating the one or more criteria defined by the machine-readable rule may comprise inputting the one or more attributes to a smart contract associated with the machine-readable rule. Evaluation of the criteria defined by the machine-readable rules using a smart contract executed on a blockchain further increases the tamper-proof nature of the implementation of the regulations relating to the sensitive data.

Extracting the one or more attributes from the intercepted data may comprise: identifying one or more attributes defined by the machine-readable rule; and extracting the identified one or more attributes defined by the machine-readable rule from the intercepted data.

Initiating the action defined by the machine-readable rule may comprise initiating a data pipeline application to remove one or more records of the request associated with the sensitive data from one or more logs and/or databases associated with the sensitive data.

The computer-implemented method may further comprise recording a violation event on a blockchain in response to determining that one of the one or more criteria defined by the machine-readable rule is satisfied. Recording the violation event on the blockchain may comprise evaluating the one or more criteria defined by the machine-readable rule by inputting the one or more attributes to a smart contract associated with the machine-readable rule, wherein the smart contract is configured to record the violation event on the blockchain in response to determining that one of the one or more criteria defined by the machine-readable rule is satisfied. Recording the violation event to the blockchain allows for compliance with the regulations relating to the sensitive data to be tracked in a tamper-proof manner.

The computer-implemented method may further comprise: determining a status of the action defined by the machine-readable rule, wherein the status of the action indicates a degree to which the action has been successfully executed; and recording the status of the action to a blockchain. Recording the status of the action to a blockchain allows for actions associated with the regulations relating to the sensitive data to be tracked in a tamper-proof manner.

The request associated with the sensitive data may be a request to access the sensitive data. Initiating the action defined by the machine-readable rule may comprise denying access to the sensitive data. Accordingly, access to sensitive data can be denied for requests that do not comply with regulations relating to the sensitive data.

The request associated with the sensitive data may be a request to initiate a payment transaction. Initiating the action defined by the machine-readable rule may comprise preventing the payment transaction. Accordingly, payment transactions that do not comply with payment transaction data regulations can be prevented.

The request associated with the sensitive data may be a request to download the sensitive data. Initiating the action defined by the machine-readable rule may comprise preventing download of the sensitive data. Accordingly, downloads of sensitive data that do not comply with regulations relating to the sensitive data can be prevented.

The request associated with the sensitive data may be a request to modify the sensitive data. Initiating the action defined by the machine-readable rule may comprise removing one or more data entries from a database storing the sensitive data.

Accordingly, modifications to sensitive data that do not comply with regulations relating to the sensitive data can be compensated for.

According to a second aspect of the present disclosure, there is provided a system for processing a request associated with sensitive data, the system comprising: a touchpoint configured to intercept data from the request associated with the sensitive data; a rule repository configured to store one or more machine-readable rules, wherein each of the one or more machine-readable rules defines: one or more criteria associated with the machine-readable rule; and an action associated with the machine-readable rule; and a rule processor configured to implement the computer-implemented method according to the first aspect.

The rule repository may store the one or more machine-readable rules on a blockchain. Storage of the machine-readable rules on a blockchain (i.e. a tamper-proof mechanism) allows regulations relating to sensitive data to be implemented in a tamper-proof manner.

The touchpoint may comprise software configured to intercept the data from the request associated with the sensitive data. The software may be configured to monitor one or more end user requests received at an application programming interface, API, gateway associated with the sensitive data. The software may be configured to monitor one or more activities of a service instance associated with the sensitive data. The software may be configured to monitor one or more requests to access sensitive data stored in a data store. The data store may be a transaction data store or an analytics data store. The software may be configured to monitor one or more requests to transfer sensitive data from a first data store to a second data store. The integration of multiple touchpoints with systems and applications that access and/or process the sensitive data allows compliance with the rules to be determined across the typically diverse landscape of such systems and applications.

According to a third aspect of the present disclosure, there is provided a computer-readable medium storing instructions that, when executed by one or more processors of a computing device, cause the computing device to implement the computer-implemented method of the first aspect.

### BRIEF DESCRIPTION OF FIGURES

Specific embodiments are described below by way of example only and with reference to the accompanying drawings, in which:
FIG. 1 shows a schematic diagram of an environment in which payment transaction data is processed, according to one or more examples described herein.
FIG. 2 shows a schematic diagram of a system configured to process a request associated with payment transaction data, according to one or more examples described herein.
FIG. 3 shows a flowchart of a method of processing a request associated with payment transaction data, according to one or more examples described herein.
FIG. 4 shows a schematic diagram of a computing device configured to implement the methods of the present disclosure.

### DETAILED DESCRIPTION

Implementations of the present disclosure are explained below with particular reference to sensitive data in the form of payment transaction data. It will be appreciated, however, that the implementations described herein are also applicable to other types of sensitive user data, including personal identifiable information (PII) such as passport data or biometric data.

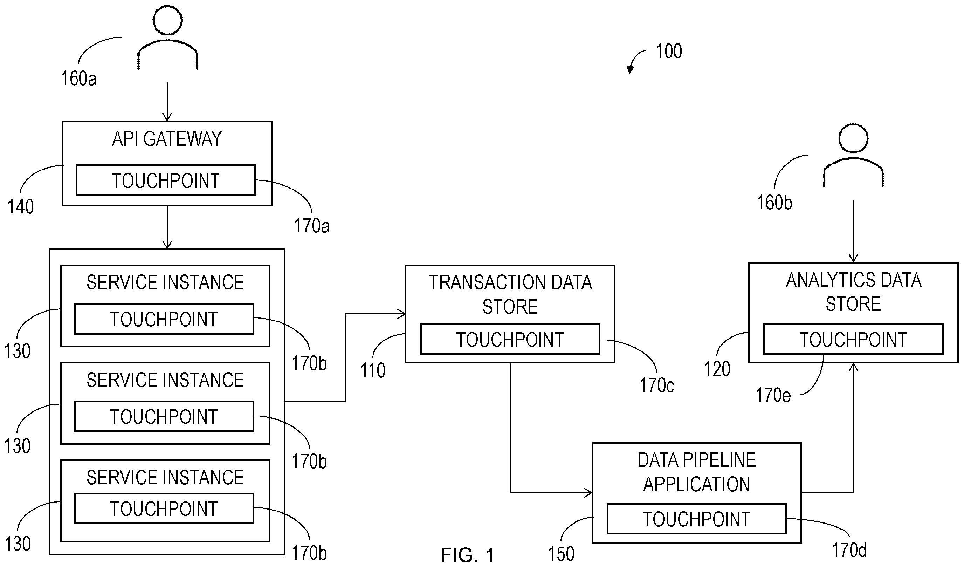

FIG. 1 is a schematic diagram of an environment 100 in which payment transaction data is processed. Payment transaction data is stored in a transaction data store 110, typically in a row-oriented format. The payment transaction data stored in the transaction data store 110 is subject to a data pipeline process that periodically transfers data from the transaction data store 110 to an analytics data store 120 (which may be initiated, for example, using a data pipeline application 150). For example, payment transaction data may be transferred in batch from the transaction data store 110 to the analytics data store 120 every 24 hours. The analytics data store 120 can be used to enable big data queries and artificial intelligence / machine learning operations to be carried out on the payment transaction data. The data in the analytics data store 120 is typically stored in column-oriented format to allow for faster queries.

A change data capture (CDC) process may be used to update the payment transaction data stored in the analytics data store 120 with the most recent version of the payment transaction data stored in the transaction data store 110.

It will be appreciated that payment transaction data includes data that may be usable to identify an individual (i.e. PII). Such payment transaction data may include sensitive customer information, including bank account and/or payment card details. Accordingly, applications that access payment transaction data may be accessing PI I, potentially including sensitive customer information.

A number of service instances 130 process payment transaction data. For example, service instances 130 may store payment transaction data in the transaction data store 110 or access payment transaction data stored in the transaction data store 110. Each service instance 130 may be an instance of a service provided to a customer, for example, a payments service or a funds transfer service. In a distributed computing environment, such services are deployed on multiple nodes for high availability purposes. For example, on Amazon Web Services, a service may be deployed on multiple Elastic Compute Cloud (EC2) containers. As used herein, the term "service instance" is used to refer to the deployment of the service at a particular node (e.g. a particular EC2 container). Such services are typically accessed via an application programming interface (API) gateway 140. Service instances 130 do not, however, need to be initiated by a request received via the API gateway 140, and may interface with the transaction data store 110 of their own accord. For example during bootstrapping of a service instance 130 (i.e. starting up of a service instance 130), the service instance 130 typically connects to data stores (e.g. the transaction data store 110) to load certain data (e.g. partner IDs, card ranges, etc.).

Various requests may be associated with the payment transaction data processed in the environment 100. Examples of requests include requests associated with data in motion, and requests associated with data at rest. Requests associated with data in motion can include, for example: a request received from a first user 160a at the API gateway 140 to initiate a payment; and a request from a data pipeline application 150 to transfer payment transaction data from the transaction data store 110 to the analytics data store 120 (which may, as explained above, be part of a CDC process). Requests associated with data at rest can include, for example: a request received from a second user 160b to access, query or download payment transaction data from the analytics data store 120; a request to add payment transaction data to the analytics data store 120; a request to access, query or download payment transaction data from the transaction data store 110 (e.g. from the data pipeline application 150); and a request relating to booting of a service application instance (e.g. the service instance 130) that communicates with the transaction data store 110.

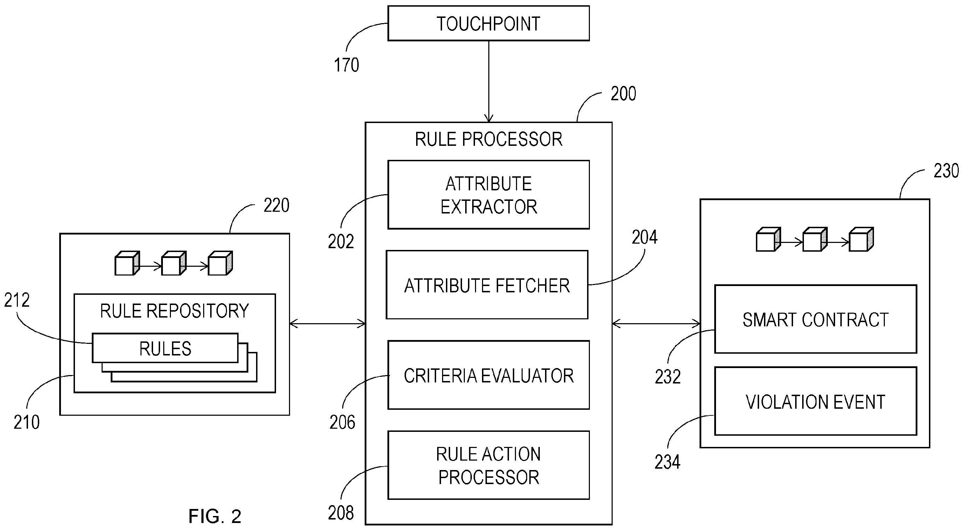

As shown in FIG. 1, the data processing environment 100 includes a number of touchpoints 170 that are capable of intercepting data associated with the requests. Each touchpoint 170 is implemented in the form of a software application that is capable of intercepting data associated with a request, making a call to a rule processor 200 (described below with reference to FIG. 2), and passing the intercepted data to the rule processor 200 (e.g. as the payload of the call to the rule processor 200). In a web application, the touchpoints 170 can be implemented in the form of filters, in which case all requests would be intercepted by the filters. Non-sensitive information (e.g. the endpoint, such as /payments) and the action (PUT, POST, etc.) from the request is passed to the rule processor 200 so that the rule processor 200 can establish whether there are any rules associated with the request. If no violation of rules is found, then the endpoint is invoked and the request proceeds.

In the example shown in FIG. 1, the API gateway 140 includes a first touchpoint 170a, which may be integrated into the API gateway 140 itself. The first touchpoint 170a monitors all end user requests (e.g. requests received from the first user 160a) received at the API gateway 140.

In addition, each service instance 130 includes a second touchpoint 170b that monitors activity of that service instance 130. For example, the second touchpoint 170b may monitor the service instance 130 during bootstrapping of the service instance 130, in order to ensure that the service instance 130 connects to a database in a particular country (e.g. the same country as that in which the transaction data store 110 is located).

The transaction data store 110 includes a third touchpoint 170c. For example, the third touchpoint 170c may monitor all requests to access data stored in the transaction data store 110. In addition, the data pipeline application 150 used to transfer data from the transaction data store 110 to the analytics data store 120 may incorporate a fourth touchpoint 170d.

Finally, the analytics data store 120 includes a fifth touchpoint 170e. The fifth touchpoint 170e monitors all requests to access data stored in the analytics data store 120 (e.g. requests received from the second user 160b). For example, the fifth touchpoint 170e may monitor requests to download and/or query transaction data from the analytics data store 120.

Although five specific touchpoints 170 are illustrated in FIG. 1, it will be appreciated that other touchpoints may be used to monitor requests associated with data. For example, one or more touchpoints may be integrated into an authorisation service, APIs, database application integration layers, and/or change data capture applications.

As mentioned above, each touchpoint 170 is capable of intercepting data from a request associated with payment transaction data, and sending the intercepted data to a rule processor 200 (shown in FIG. 2) for the intercepted data to be evaluated against one or more rules. In particular, each touchpoint 170 is capable of intercepting data from a request, and making a call to the rule processor 200. In one example, a payload of the call comprises the intercepted data. For example, for a payment request from the first user 160a shown in FIG. 1, the first touchpoint 170a in the API gateway 140 may intercept data relating to the payment request and send a request to the rule processor 200 for the intercepted data to be evaluated against one or more rules.

As mentioned above, the environment 100 may alternatively or additionally be used for handling other types of PII besides payment transaction data. For example, a user may provide their passport number to a website of an airline, or may provide biometric data in order to access applications on the user's smartphone. The environment 100 may be used for handling such other types of PII. It will be appreciated that, for handling other types of PI I, the environment 100 may include fewer entities than those described above, or may include additional entities.

As shown in FIG. 2, the rule processor 200 comprises an attribute extractor 202, an attribute fetcher 204, a criteria evaluator 206, and a rule action processor 208, each of which is described in turn below.

Initially, a touchpoint 170 makes a call (e.g. request) to the rule processor 200. The rule processor 200 receives the call from the touchpoint 170 and retrieves one or more rules from a rule repository 210. The rule repository 210 stores a plurality of data-related rules 212. The rules 212 are stored in the rule repository 210 in a machine-readable format. For example, the rules 212 may be defined in a machine-readable format such as JSON, XML, or a custom DSL, and may include an "if-when" structure. The rule processor 200 examines the call from the touchpoint 170 to determine the context (i.e. endpoint, action, etc.) of the request associated with the payment transaction data, and retrieves the one or more rules 212 from the rule repository 210 based on the determined context.

Examples of machine-readable data-related rules 212 stored in the rule repository 210 include: a rule 212 specifying that all domestic transaction data (i.e. where an issuer is located within a particular country and either an acquirer and/or a merchant is located within that country) is stored within the country; a rule 212 specifying that a copy of cross-border transaction data (i.e. where the issuer is located within a particular country, or the acquirer and/or merchant are located within that country) is stored within the country within 24 hours of the transaction; a rule 212 relating to audit of all read-only queries on the transactional data store 110 and the analytics data store 120 (e.g. restricting access to or operations on data based on end user ID, the table being queried, etc.); a rule 212 prohibiting download of payment transaction data from the transactional data store 110 or the analytical data store 120, irrespective of region; a rule 212 specifying that any processing of payment transaction data (e.g. by the service instances 130) is carried out using infrastructure located in the same country as that in which the payment transaction data is stored; and a rule 212 specifying that all customers are required to establish network connectivity physically from within the country (e.g. based on the request's country of origin, by comparing the IP address in the request against a geo-IP database, or using a system such as Cloudflare or Akamai in front of the API gateway 140 to automatically pass the ISO country code header in the request).

In one example, the rule repository 210 stores the machine-readable data-related rules 212 on a blockchain 220. Storage of the data-related rules on a blockchain 220 means that the rules 212 are stored in a tamper-evident manner. For example, a payments network and a central bank may both have visibility of the data-related rules 212 stored on the blockchain 220. Accordingly, one party cannot change the data-related rules 212 without another party having visibility of that change. To change the data-related rules 212, therefore, agreement from both parties is needed. When changing the data-related rules 212, the rules 212 written to a block on the blockchain 220 are replaced with new rules 212 that are written to a new block. The machine-readable rules 212 stored on the blockchain 220 may each be mapped to various contexts (e.g. certain machine-readable rules 212 may be associated with the context POST /payments/v1/, meaning that the context includes the user action (i.e. POST) and the URL (i.e. /payments/v1/)).

Each machine-readable data-related rule 212 in the rule repository 210 may define: (i) the attributes required for evaluation of the rule 212; (ii) one or more criteria associated with the rule 212 (which relate to the rule's required attributes); and (iii) an action specifying one or more operations to be carried out in the event that one of the one or more rule criteria are satisfied.

Once the one or more rules 212 are retrieved from the rule repository 210, the attribute extractor 202 then extracts, from the payload of the call, the attributes required for evaluation of the retrieved rules 212. For example, the attribute extractor 202 may determine the attributes required in order to evaluate each of the retrieved rules 212, and attempt to extract each of the determined attributes from the payload of the call from the touchpoint 170. In one example, determining the attributes required for evaluation of the retrieved rules 212 comprises identifying the attributes specified by each rule 212. Examples of attributes that may be extracted from the call payload by the attribute extractor 202 include a first name, account ID, etc. If the request is in JSON format, frameworks such as JSONPath and JOLT can be used to extract the required attributes from the payload of the call.

The attribute fetcher 204 fetches any additional attributes required in order for the retrieved rules 212 to be evaluated. In particular, the attribute fetcher 204 examines the attributes specified by the retrieved rules 212 and determines whether additional attributes are required in order to evaluate the retrieved rules 212. Examples of additional attributes that may not be included in a request associated with payment transaction data include bank account details, fraud check, credit score, police records, etc.

The attribute fetcher 204 retrieves additional attributes from external systems using, for example, API calls, calls to public or private blockchains, etc. In one example, the attribute fetcher 204 retrieves the additional attributes using adapters, which are software applications that integrate with external systems. Such adapters include, for example, HTTP adapters, blockchain adapters, Slack adapters, email adapters, Splunk adapters, and the like. The attribute fetcher 204 requests the additional attributes using one or more APIs associated with the adapters. It will be appreciated that, if no additional attributes are required in order for the rule processor 210 to determine whether the rule criteria are satisfied, then the attribute fetcher 204 may not be invoked.

The attributes extracted by the attribute extractor 202 and retrieved by the attribute fetcher 204 are then passed to the criteria evaluator 206. The criteria evaluator 206 evaluates the criteria associated with each of the rules 212 (i.e. the "when" part of the "if-when" rule structure) retrieved from the rule repository 210.

In one example, the criteria evaluator 206 operates in "blockchain mode", in which case the criteria associated with each rule 212 are evaluated using a smart contract 232 stored on a separate blockchain 230. Accordingly, in blockchain mode, the rule criteria are evaluated in a tamper-proof manner. In such cases, the "when" part of the rule 212 includes instructions for communication between the criteria evaluator 206 and the smart contract 232. For example, the criteria associated with each rule 212 may be evaluated using a distinct smart contract 232. If the smart contract 232 determines that the criteria associated with a particular rule 212 are satisfied, then the smart contract 232 flags a violation event 234 associated with that rule 212, which is stored on the blockchain 230. The response from the smart contract 232 may then be passed back to the criteria evaluator 206. Communication between the criteria evaluator 206 and the smart contract 232 can be carried out using web3j and a JSON-RPC based protocol.

As an alternative, the criteria evaluator 206 may operate in an "embedded mode", in which the criteria associated with rules 212 are stored at the rule processor 200 (or elsewhere locally on a business entity's infrastructure). In this case, the rule criteria may be evaluated without making calls to the blockchain 220, although a violation event 234 may still be written to the separate blockchain 230 by the criteria evaluator 206 in the event that the criteria associated with a particular rule 212 are satisfied. In the embedded mode, the rule criteria are evaluated on the business entity's infrastructure, meaning that the rule criteria may be evaluated with reduced latency, because calls to a blockchain are not required. However, it will be appreciated that embedded mode operation does not provide any guarantee that the rule criteria are evaluated in a tamper proof manner. For example, a bug, issue or malicious change may prevent evaluation of the rule criteria. Accordingly, the criticality of a rule 212 may determine whether the rule criteria are evaluated in embedded mode or using smart contracts 232. In one example, the rule 212 itself may specify how the rule criteria are to be evaluated (e.g. in embedded mode, or using smart contracts 232 executed on the blockchain 230).

If the criteria evaluator 206 determines that the criteria associated with a particular rule 212 are satisfied, then the rule action processor 208 initiates an action defined by the rule 212. In particular, the rule action processor 208 may enforce the rule 212 and/or execute a compensation flow defined by the rule 212. In order to execute the compensation flow, the rule action processor 208 issues commands to a plurality of adapters associated with external systems. For example, the rule action processor 208 may issue commands to one or more adapters to delete a record relating to the request associated with the payment transaction data.

The rule action processor 208 can both enforce rules 212 and execute a compensation flow. Enforcement of a rule may include, for example: denying a request, such as denying access to payment transaction data or preventing a transaction. Execution of a compensation flow may include, for example: removing a record of a transaction that has been denied (e.g. by removing logs stored at the API gateway 140), or executing a data pipeline application to remove a data record from multiple systems. For example, a HTTP adapter can be used to delete data records from various databases. As another example, an API call may be made to a Splunk adapter to delete an entry from a Splunk log. As a further example, a trace remover pipeline can attempt to remove records from multiple systems (such as from a log, database, and API gateway). The trace remover pipeline may attempt to remove the record from each system and report back on the success of removing the records.

The rule action processor 208 can write a record to the blockchain 230 indicating that a rule 212 was enforced or that a compensation flow was executed, and indicating whether the compensation flow was successful (e.g. whether the record was successfully deleted). Accordingly, in order to indicate whether the compensation flow was successful, the rule action processor 208 may determine a status of the compensation flow and/or the rule enforcement, wherein the status indicates a degree to which the compensation flow and/or rule enforcement was successful. For example, if the execution of a particular step of the compensation flow fails, an exception may be thrown, which can be used to mark the compensation flow as failed. In another example, if a compensation flow is partially executed, then the status may indicate that the compensation flow was partially completed, or may indicate the proportion of the steps of the compensation flow that were completed. As one specific example, a compensation flow includes four steps, where step two is a clean up of the audit trail of a transaction from a logging system. Due to a systemic error, step two could not be completed, even after a certain number of retries. In this specific example, the status may indicate that the compensation flow was partially completed, or that one out of four steps of the compensation flow were successful.

The rules 212 stored in the rule repository 210 may be changed over time. For example, rules 212 may be changed in order to account for regulatory changes relating to payment transaction data. As noted above, changes to the rules 212 require agreement from the parties with visibility into the rules (e.g. payment network, central bank). As one example, user's IP addresses may, in future, be considered PII data. In such a scenario, the rules 212 may be adapted to account for the change in definition of PII data, in order to prevent access to or download of IP address data.

In another example, rules 212 may be added to the rule repository 210 to prevent certain individuals from making transactions. For example, name and bank account data may be provided for an individual that is subject to sanctions. In such cases, a rule 212 can be added to prevent transactions involving that individual's bank account. Accordingly, upon receipt of a call relating to a request to initiate a payment transaction from or to a particular bank account, a rule 212 can be retrieved from the rule repository 210, and the payment transaction can be prevented if the sender or recipient bank account matches the bank account details specified in the retrieved rule 212.

Although the above example describes executing the criteria evaluator 206 in blockchain mode using a smart contract 232, other functionality of the rule processor 200 may also be implemented using smart contracts 232. For example, each of the attribute extractor 202, the attribute fetcher 204 and the rule action processor 208 may be implemented using smart contracts 232 executed on the blockchain 230. In addition, the functionality of the rule processor 200 that retrieves the relevant rules 212 from the rule repository 210 may also be implemented using a smart contract 232 executed on the blockchain 230.

Examples of rules implemented by the rule processor 200 are described further below.

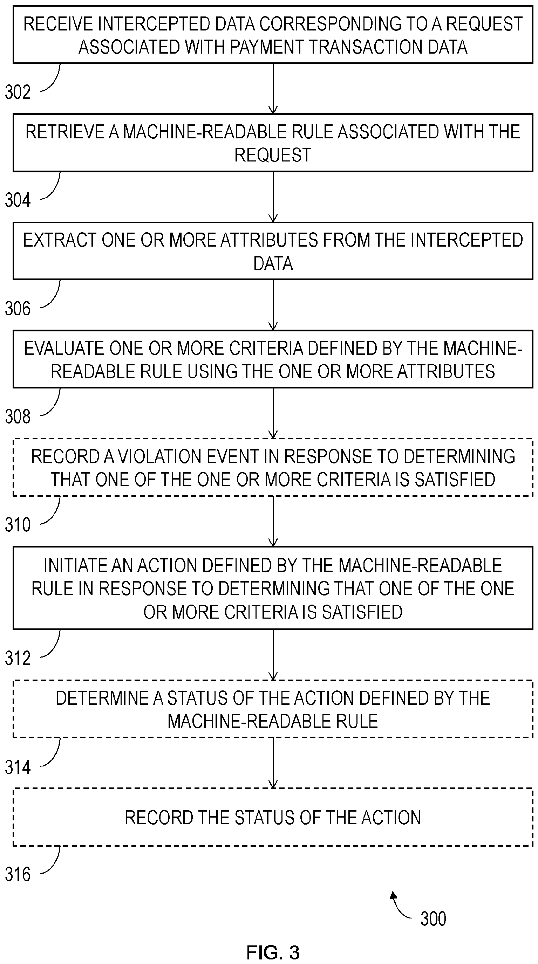

FIG. 3 is a flowchart of a method 300 of processing a request associated with sensitive data such as, but not limited to, payment transaction data. The method 300 may be implemented using the rule processor 200 described above. In one example, a computer-readable medium may instructions that, when executed by a processor of a rule processor 200 (e.g. a processor 402 of the computer apparatus 400 described below), cause the rule processor 200 to implement the method 300.

At 302, intercepted data corresponding to the request associated with the payment transaction data is received at the rule processor 200. For example, the intercepted data may be received from one or more touchpoints 170 that are configured to intercept data from the request associated with the payment transaction data.

At 304, a machine-readable rule 212 associated with the request is retrieved by the rule processor 200. In one example, the machine-readable rule 212 is retrieved from a blockchain 220 on which the machine-readable rule 212 is stored. The machine-readable rule 212 defines one or more criteria associated with the machine-readable rule 212, along with an action associated with the machine-readable rule 212.

At 306, one or more attributes are extracted from the intercepted data by the rule processor 200. In one example, the one or more attributes are extracted by identifying one or more attributes defined by the machine-readable rule 212, and extracting the one or more identified attributes defined by the machine-readable rule 212 from the intercepted data received at 302.

At 308, the one or more criteria defined by the machine-readable rule 212 are evaluated by the rule processor 200 using the one or more attributes extracted at 306. In one example, evaluating the one or more criteria defined by the machine-readable rule 212 comprises inputting the one or more attributes to a smart contract 232 associated with the machine-readable rule 212.

Optionally, at 310, the method 300 comprises recording a violation event 234 on a blockchain 230 in response to determining that one of the one or more criteria defined by the machine-readable rule 212 is satisfied. In one example, where the one or more criteria are evaluated at 308 by inputting the one or more attributes to a smart contract 232, the violation event 234 may be recorded on the blockchain 230 as an output from the smart contract 232 in response to the smart contract 232 determining that one of the one or more criteria defined by the machine-readable rule 212 is satisfied.

At 312, an action defined by the machine-readable rule 212 is initiated by the rule processor 200 in response to the rule processor 200 determining that one of the one or more criteria defined by the machine-readable rule 212 is satisfied. In one example, initiating the action defined by the machine-readable rule 212 comprises the rule processor 200 denying the request associated with the payment transaction data. The payment transaction data may comprise sensitive customer information, in which case denying the request associated with the payment transaction data comprises denying access to the sensitive customer information.

Additionally or alternatively, initiating the action defined by the machine-readable rule 212 comprises initiating a compensation flow defined by the machine-readable rule 212. In this case, initiating the compensation flow may comprise initiating a data pipeline application to remove one or more records of the request associated with the payment transaction data from one or more logs (e.g. logs maintained by the API gateway 140 or logs maintained by the analytics data store 120), and/or from or more databases associated with the payment transaction data (e.g. the transaction data store 110 and/or the analytics data store 120).

In one example, the request associated with the payment transaction data is a request to access the payment transaction data. In this case, initiating at 312 the action defined by the machine-readable rule 212 comprises denying access to the payment transaction data. In a specific instance of this example, the request to access the payment transaction data may be a request to transfer the payment transaction data from a first data store (e.g. the transaction data store 110) to a second data store (e.g. the analytics data store 120). In an alternative instance of this example, the request to access the payment transaction data may be a request from a service instance 130 that processes the payment transaction data.

In another example, the request associated with the payment transaction data is a request to initiate a payment transaction. In this case, initiating at 312 the action defined by the machine-readable rule 212 comprises preventing the payment transaction. In a specific instance of this example, the request to initiate the payment transaction is intercepted at the API gateway 140.

In a further example, the request associated with the payment transaction data is a request to download the payment transaction data. In this case, initiating at 312 the action defined by the machine-readable rule 212 comprises preventing download of the payment transaction data.

In a yet further example, the request associated with the payment transaction data is a request to modify the payment transaction data. In this case, initiating at 312 the action defined by the machine-readable rule 212 comprises removing one or more data entries from a database storing the payment transaction data (e.g. the transaction data store 110 and/or the analytics data store 120). In a specific instance of this example, the request to modify the payment transaction data is part of a CDC process carried out on payment transaction data stored in the transaction data store 110.

Optionally, at 314, a status of the action defined by the machine-readable rule 212 is determined (e.g. by the rule processor 200). The status of the action indicates a degree to which the action has been successfully executed. In one example, where a compensation flow is initiated at 312, the status of the action indicates a degree to which the compensation flow has been successfully executed. Where a status of the action defined by the machine-readable rule 212 is determined at 314, then the method 300 also optionally includes, at 316, recording the status of the action. In one example, the status of the action is recorded to the blockchain 230.

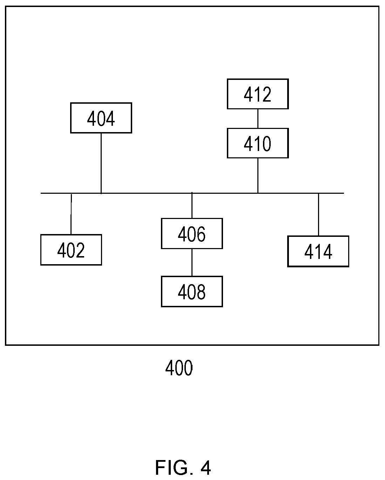

FIG. 4 is a schematic and simplified representation of a computer apparatus 400 which can be used to perform the methods described herein, either alone, in combination with other computer apparatuses or as part of a "cloud" computing arrangement. In particular, the computer apparatus 400 may be configured to perform the method 300 described above, in order to implement the functionality of the rule processor 200 described above.

The computer apparatus 400 comprises various data processing resources such as a processor 402 (in particular a hardware processor) coupled to a central bus structure. Also connected to the bus structure are further data processing resources such as memory 404. A display adapter 406 connects a display device 408 to the bus structure. One or more user-input device adapters 410 connect a user-input device 412, such as a keyboard and/or a mouse to the bus structure. One or more communications adapters 414 are also connected to the bus structure to provide connections to other computer systems 400 and other networks (e.g. to the touchpoints 170 and one or more adapters).

In operation, the processor 402 of computer system 400 executes a computer program comprising computer-executable instructions that may be stored in memory 404. When executed, the computer-executable instructions may cause the computer system 400 to perform one or more of the methods described herein, such as the method 300 described above. The results of the processing performed may be displayed to a user via the display adapter 406 and display device 408. User inputs for controlling the operation of the computer system 400 may be received via the user-input device adapters 410 from the user-input devices 412.

It will be apparent that some features of computer system 400 shown in FIG. 4 may be absent in certain cases. For example, one or more of the plurality of computer apparatuses 400 may have no need for display adapter 406 or display device 408. This may be the case, for example, for particular server-side computer apparatuses 400 which are used only for their processing capabilities and do not need to display information to users. Similarly, user input device adapter 410 and user input device 412 may not be required. In its simplest form, computer apparatus 400 comprises processor 402 and memory 404.

The present disclosure provides a method in which rules relating to sensitive data (such as payment transaction data, biometric data, or other types of PII) are provided in a machine-readable format, thereby allowing such rules to be evaluated against attributes extracted from a request associated with the sensitive data. By providing the rules in a machine-readable format, the rules can be evaluated automatically, thereby removing the need for manual monitoring for compliance with the rules. In addition, the integration of multiple touchpoints with systems and applications that access and/or process the sensitive data allows compliance with the rules to be determined across the typically diverse landscape of such systems and applications.

In addition, by initiating an action defined by a machine-readable rule, violation of a particular rule can either be prevented, or compensated for. Consequently, the present disclosure provides a mechanism for determining whether certain regulations relating to sensitive data are violated, and for preventing other regulations relating to sensitive data from being violated in the first place. This means that both violation of the regulations and enforcement of the regulations can be determined and monitored. The systems and methods described herein therefore allow an entity (such as a central bank) to identify a number of rule violations, along with actions (such as compensation events) associated with those violations. In some instances, the entity can also identify the success of the compensation events associated with the violations. Accordingly, the systems and methods described herein provide increased visibility into compliance with rules associated with sensitive data.

It will be appreciated that by preventing violation of certain regulations relating to sensitive data, any sensitive customer information (such as PII) contained in the sensitive data is also protected. Accordingly, the systems and methods described herein also prevent misuse of sensitive customer information such as PII.

Moreover, the systems and methods described herein allow regulations relating to sensitive data to be implemented in a tamper-proof manner. This is achieved by storage of the machine-readable rules on a blockchain, which is a tamper-proof mechanism. Consequently, the machine-readable rules cannot be changed without such changes being visible to other parties.

Implementation of the regulations relating to sensitive data in a tamper-proof manner is also achieved by evaluation of the criteria defined by the machine-readable rules using smart contracts that are executed on a blockchain. Further tamper-proofing of the functions carried out by the rule processor described herein can be achieved by using smart contracts for other functions of the rule processor (for example, retrieval of rules, extraction of attributes, and/or initiation of actions).

In addition, the systems and methods described herein allow for compliance with the regulations relating to sensitive data to be tracked in a tamper-proof manner. This is achieved by recording a violation event to a blockchain, in the event that one or more criteria defined by a machine-readable rule are satisfied (i.e. in the event that a particular rule has been violated). Finally, the systems and methods described herein allow for actions (such as compensation events) associated with the regulations relating to sensitive data to be tracked in a tamper-proof manner. This is achieved by recording a status of an action (such as a compensation event) defined by a machine-readable rule to the blockchain.

The systems and methods described herein can: deny access to sensitive data for requests that do not comply with regulations relating to the sensitive data; prevent payment transactions that do not comply with payment transaction data regulations; prevent downloads of sensitive data that do not comply with regulations relating to the sensitive data; and/or compensate for modifications to sensitive data that do not comply with regulations relating to the sensitive data.

### Examples

In a first example, a rule 212 specifies that a user-initiated payment request is only allowed to originate from within a particular country (in this example, India). In this case, the trigger event associated with the payment transaction data is the invocation of an API (e.g. at the API gateway 140) used to initiate a payment from outside India (e.g. POST /payments/v1/).

Following the invocation of the API, the payment request is intercepted by the touchpoint 170a associated with the API gateway 140. The touchpoint 170a then makes a call to the rule processor 200. The call includes a payload including, for example, the user data received at the API gateway 140.

The rule processor 200 then fetches, from the rule repository 210, one or more rules 212 based on the context (i.e. POST /payments/v1/) of the payment request. The rule repository 210 returns the one or more rules 212 in a machine-readable format. In this example, the rule repository 210 returns a rule 212 that a user-initiated payment request is only allowed to originate from within India.

The attribute extractor 202 identifies, from the one or more rules 212 returned by the rule repository 210, the attributes needed in order to evaluate the one or more rules 212. The attribute extractor 202 then extracts the attributes from the call payload and, if necessary, calls the attribute fetcher 204 to fetch any additional attributes needed for evaluation of the one or more rules 212. In this example, the attributes of the rule 212 specifying that only payment requests originating from within India are allowed include: country, sender ID, request ID, and timestamp. In this case, the country and request ID are present in the header of the payment request, and the sender ID and timestamp are present in the body of the payment request. This data is therefore included in the payload of the call to the rule processor 200 from the touchpoint 170a, meaning that no additional attributes need to be fetched (i.e. the attribute fetcher 204 does not need to be invoked).

The criteria evaluator 206 evaluates the "when" part of the one or more rules 212 returned by the rule repository 210. In this example, the one or more criteria of the rule 212 listed above are evaluated in a blockchain mode, by inputting the extracted attributes to a smart contract 232. Given that the country in the payment request is not India, the smart contract 232 determines that the rule criteria are not satisfied, and consequently flags the non-compliance with the rule 212 as a violation event 234 on the blockchain 230 (or alternatively on a separate blockchain). In this case, both the rule enforcer (e.g. a central bank such as Reserve Bank of India (RBI)) and the payments network (e.g. Mastercard) have visibility into the violation event 234 written to the blockchain 230. The smart contract 232 then returns a response back to the rule processor 200 (specifically, to the rule action processor 208) so that the compensation flow associated with the rule 212 can be executed.

The compensation flow associated with the rule 212 is implemented by the rule action processor 208. In this example, the compensation flow of the rule 212 includes two parts: a violation reporter, and a trace remover. The violation reporter is a Slack alert to RBI and Mastercard, and includes the following inputs: sender ID, and violation type (in this case: TRANSACTION_CRITERIA_FAILED). The rule action processor 208 communicates with a Slack adapter (e.g. via an API) in order to implement the violation report (i.e. provide the Slack alert). The trace remover is implemented using a data pipeline application, and includes the following inputs: request ID. The rule action processor 208 communicates with a data pipeline application adapter (e.g. via an API) in order to implement the trace remover flow (i.e. remove the request ID from one or more systems).

In a second example, a rule 212 specifies that whenever a new application instance (e.g. a virtual machine, a Docker Container on Amazon Azure, etc.) bootstraps on Indian soil, any connection to a database storing payment transaction data must be to a database on Indian soil. In this case, the compensation flow defined by the rule 212 involves terminating the application instance, creating an incident, and notifying entities associated with the database (e.g. Mastercard) through email and Slack.

In a third example, a rule 212 specifies that whenever payment transaction data is being copied over from a primary database to a read replica database, the data must not cross the soil boundary (i.e. must not leave India). For example, a payment transaction record relating to a transaction on Indian soil may inadvertently be inserted into a database located in the US (for example, during a CDC process). Such a scenario may occur, for example, if a master database on Indian soil is down, and a slave database in the US is promoted (based on a previously unknown misconfiguration in the database system concerning non-availability of a master database). An event is triggered as part of the CDC process, by recognising that the country associated with the payment transaction data is India, but that the database is in the US, meaning that a violation of the rule 212 of the third example has occurred. In this case, the compensation flow defined by the rule 212 involves stopping the data transfer, creating an incident, and notifying relevant entities accordingly. The incident may include an order for the database system misconfiguration to be fixed.

Although the above implementations are described with reference to sensitive data, it will be appreciated that the systems and methods described above are also applicable to the enforcement of rules relating to other types of data that will be apparent to the skilled person (e.g. other types of restricted usage data). In a general sense, therefore, the systems and methods described herein permit enforcement of rules relating to data in a tamper-proof manner, prevent violation of rules relating to data, and track both violation and enforcement of rules relating to data.

The described methods may be implemented using computer executable instructions. A computer program product or computer readable medium may comprise or store the computer executable instructions. The computer program product or computer readable medium may comprise a hard disk drive, a flash memory, a read-only memory (ROM), a CD, a DVD, a cache, a random-access memory (RAM) and/or any other storage media in which information is stored for any duration (e.g., for extended time periods, permanently, brief instances, for temporarily buffering, and/or for caching of the information). A computer program may comprise the computer executable instructions. The computer readable medium may be a tangible or non-transitory computer readable medium. The term "computer readable" encompasses "machine readable".

The singular terms "a" and "an" should not be taken to mean "one and only one". Rather, they should be taken to mean "at least one" or "one or more" unless stated otherwise. The word "comprising" and its derivatives including "comprises" and "comprise" include each of the stated features, but does not exclude the inclusion of one or more further features.

The above implementations have been described by way of example only, and the described implementations are to be considered in all respects only as illustrative and not restrictive. It will be appreciated that variations of the described implementations may be made without departing from the scope of the invention. It will also be apparent that there are many variations that have not been described, but that fall within the scope of the appended claims.

## Claims

1. A computer-implemented method of processing a request associated with sensitive data, the method comprising:
receiving, at a rule processor, intercepted data, wherein the intercepted data corresponds to the request associated with the sensitive data;
retrieving, by the rule processor, a machine-readable rule associated with the request, wherein the machine-readable rule defines:
one or more criteria associated with the machine-readable rule; and
an action associated with the machine-readable rule;
extracting, by the rule processor, one or more attributes from the intercepted data;
evaluating, by the rule processor, the one or more criteria defined by the machine-readable rule using the one or more attributes; and
initiating, by the rule processor, the action defined by the machine-readable rule in response to determining that one of the one or more criteria defined by the machine-readable rule is satisfied.

2. A computer-implemented method according to claim 1, wherein initiating the action defined by the machine-readable rule comprises denying, by the rule processor, the request associated with the sensitive data.

3. A computer-implemented method according to claim 2, wherein denying the request associated with the sensitive data comprises denying access to the sensitive data.

4. A computer-implemented method according to any of claims 1 to 3, wherein the machine-readable rule is stored on a blockchain, and wherein retrieving the machine-readable rule comprises retrieving the machine-readable rule from the blockchain.

5. A computer-implemented method according to any of claims 1 to 4, wherein evaluating the one or more criteria defined by the machine-readable rule comprises inputting the one or more attributes to a smart contract associated with the machine-readable rule.

6. A computer-implemented method according to any of claims 1 to 5, wherein initiating the action defined by the machine-readable rule comprises initiating a data pipeline application to remove one or more records of the request associated with the sensitive data from one or more logs and/or databases associated with the sensitive data.

7. A computer-implemented method according to any of claims 1 to 6, further comprising recording a violation event on a blockchain in response to determining that one of the one or more criteria defined by the machine-readable rule is satisfied.

8. A computer-implemented method according to any of claims 1 to 7, further comprising:
determining a status of the action defined by the machine-readable rule, wherein the status of the action indicates a degree to which the action has been successfully executed; and
recording the status of the action to a blockchain.

9. A computer-implemented method according to any of claims 1 to 8, wherein the request associated with the sensitive data is a request to access the sensitive data, and wherein initiating the action defined by the machine-readable rule comprises denying access to the sensitive data.

10. A computer-implemented method according to any of claims 1 to 9, wherein the request associated with the sensitive data is a request to initiate a payment transaction, and wherein initiating the action defined by the machine-readable rule comprises preventing the payment transaction.

11. A computer-implemented method according to any of claims 1 to 10, wherein:
the request associated with the sensitive data is a request to download the sensitive data, and wherein initiating the action defined by the machine-readable rule comprises preventing download of the sensitive data; or
wherein the request associated with the sensitive data is a request to modify the sensitive data, and wherein initiating the action defined by the machine-readable rule comprises removing one or more data entries from a database storing the sensitive data.

12. A system for processing a request associated with sensitive data, the system comprising:
a touchpoint configured to intercept data from the request associated with the sensitive data;
a rule repository configured to store one or more machine-readable rules, wherein each of the one or more machine-readable rules defines:
one or more criteria associated with the machine-readable rule; and
an action associated with the machine-readable rule; and
a rule processor configured to implement the computer-implemented method according to any of claims 1 to 11.

13. A system according to claim 12, wherein the rule repository stores the one or more machine-readable rules on a blockchain.

14. A system according to claim 12 or claim 13, wherein the touchpoint comprises software configured to intercept the data from the request associated with the sensitive data, wherein the software is configured to monitor one or more of:
one or more end user requests received at an application programming interface, API, gateway associated with the sensitive data;
one or more activities of a service instance associated with the sensitive data;
one or more requests to access sensitive data stored in a data store;
one or more requests to transfer sensitive data from a first data store to a second data store.

15. A computer-readable medium storing instructions that, when executed by one or more processors of a computing device, cause the computing device to implement the computer-implemented method of any of claims 1 to 11.
